# EUROPÄISCHE PATENTSCHRIFT

(11) **EP 1 202 919 B1**
(45) Veröffentlichungstag und Bekanntmachung des Hinweises auf die Patenterteilung: **16.04.2003**
(21) Anmeldenummer: 00949036.8
(22) Anmeldetag: 04.08.2000
(51) Int. Cl.: B65G 1/04, B66F 9/07

(54) **REGALBEDIENGERÄT UND BEHÄLTER ODER PALETTEN ZUM EIN- UND AUSLAGERN DER BEHÄLTER ODER PALETTEN IN EIN BZW. AUS EINEM REGAL**
RACK CONTROL UNIT AND CONTAINERS OR PALLETS FOR STORING AND DISPLACING SAID CONTAINERS OR PALLETS IN OR OUT OF A RACK
UNITE DE COMMANDE DE RAYONNAGES AINSI QUE DES RECIPIENTS OU DES PALETTES PERMETTANT DE STOCKER RESPECTIVEMENT D'ENLEVER LESDITES RECIPIENTS OU PALETTES DANS RESPECTIVEMENT HORS D'UN RAYONNAGE

(30) Priorität: 09.08.1999 CH 146299
(43) Veröffentlichungstag der Anmeldung: 08.05.2002
(73) Patentinhaber: Manitec Consulting AG, 6048 Horw (CH)
(72) Erfinder: MATHYS, André, CH-6372 Ennetmoos (CH)
(74) Vertreter: Groner, Manfred
(86) Internationale Anmeldenummer: CH0000416
(87) Internationale Veröffentlichungsnummer: WO01010751

(56) Entgegenhaltungen:
- EP-A- 0 253 775
- EP-A- 0 322 313
- DE-A- 4 233 690
- DE-A- 19 501 883

## Beschreibung

Die Erfindung betrifft ein Regalbediengerät und Behälter oder Paletten zum Ein- und Auslagern der Behälter oder Paletten nach dem Oberbegriff des Anspruchs 1.

Regalbediengeräte dieser Art sind bekannt. Diese sind auf einem Fahrzeug angeordnet, das zwischen Regalen verfahrbar ist. Mittels den Regalbediengeräten werden Behälter oder Paletten auf dieses Fahrzeug geladen oder vom Fahrzeug in das Regal eingelagert. Wesentlich bei solchen Geräten ist, dass sie wenig Raum beanspruchen und eine hohe Leistung erbringen. Dies ist insbesondere dann wichtig, wenn ein Regal eine sehr grosse Anzahl von Behältern oder Paletten aufweist.

In der schweizerischen Patentanmeldung Nr. 430/98 (Anmeldedatum 23. Februar 1998) des Anmelders, ist ein Regalbediengerät offenbart, das als Greifmittel ein teppichartiges Organ aufweist, welches unter einen auszulagernden Behälter geschoben wird. Das teppichartige Organ benötigt vergleichsweise wenig Raum und mit diesem Gerät ist es möglich, gleichzeitig mehrere Behälter oder Paletten auszulagern.

Die EP-A-0 322 313 offenbart ein Regalbediengerät mit einer Gliederkette als umlaufend angetriebenes Organ. An der Kette sind im Abstand zueinander zwei Greifer angeordnet, die an den Umlenkbereichen jeweils eine halbkreisförmige Bahn beschreiben. Eine halbkreisförmige Bahn beschreiben ebenfalls die Greifer beim Regalbediengerät gemäss der DE-A-195 01 883. Beide Regalbediengeräte können neben den eingelagerten Behältern horizontal und vertikal verfahren werden, da die Greifer die Behälter an den Umlenkbereichen einholen. Die DE-A-42 33 690 offenbart ein Regalbediengerät, bei dem beim Greifvorgang der ganze Greifer in eine Nut des Behälters einfährt. Dieses Regalbediengerät kann lediglich vertikal zwischen den eingelagerten Behältern verfahren werden, da das Regalbediengerät bei einer horizontalen Bewegung mit den Behältern kollidieren würde.

Für Regale mit sehr vielen Behältern, beispielsweise mehreren Tausend Behältern, besteht nun das Bedürfnis, ein solches Regalbediengerät zu schaffen, das bei ebenfalls geringem Platzbedarf noch leistungsfähiger ist.

Der Erfindung liegt die Aufgabe zu Grunde, ein Regalbediengerät der genannten Gattung zu schaffen, das bei gleichem oder geringerem Raumbedarf noch leistungsfähiger und schonender arbeitet und das trotzdem funktionssicher und kostengünstig hergestellt werden kann.

Die Aufgabe ist bei einem gattungsgemässen Regalbediengerät gemäss Anspruch 1 gelöst. Das erfindungsgemässe Regalbediengerät hat den wesentlichen Vorteil, dass zum Ein- und Auslagern seitlich, d.h. quer zur Fahrrichtung des Fahrzeuges nicht bewegt werden muss. Der bisher notwendige seitliche Weg des Gerätes wird vom Greifarm in wenigstens einem Umlenkbereich zurückgelegt. Dieser Greifarm greift am genannten Umlenkbereich über die Bahn des angetriebenen Organs hinaus und greift damit den Behälter oder die Palette. Beim Fassen eines auszulagernden Behälters geht die bogenförmige Bahn des Nockens früher als bisher in eine horizontal verlaufende Bahn über, die vergleichsweise nahe zum oberen Trum verläuft. Dadurch ist eine sanftere Beschleunigung des Behälters möglich und zudem wird auf das Transportorgan beim Transport durch den Greifarm ein kleineres Drehmoment ausgeübt.

Werden zwei Greifarme und zwei Nuten an Behälter bzw. der Palette verwendet, so greift beim Auslagern vorzugsweise der eine Greifarm von unten und der andere Greifarm von oben in die entsprechende Nut ein. Dies hat den wesentlichen Vorteil, dass die Nuten ohne Klemmgefahr schmaler ausgebildet sein können. Die Behälter bzw. die Paletten sind dadurch besser geführt und beim Einlagern können die Behälter bzw. die Paletten weiter nach aussen transportiert werden.

Ein wesentlicher Vorteil des erfindungsgemässen Regalbediengerätes wird auch darin gesehen, dass die Bahn des Nockens an den Umlenkstellen nach oben oder unten weniger ausladend ist. Dadurch können auch bei geringerer Rasterhöhe bzw. niedrigeren Behältern oder Paletten eine Kollision vermieden werden.

Der Greifarm kann ein besonders ausgebildetes Glied einer Gliederkette sein. Der genannte Umlenkbereich befindet sich dort, wo die Gliederkette um ein Kettenrad geführt ist. Um den Behälter oder Palette zu fassen, weist dieser bzw. diese beispielsweise eine seitliche Nut auf, in welche der Greifbereich des Greifmittels eingreift. Der Greifbereich des Greifmittels kann beispielsweise ein Zapfen aufweisen, der zum Auslagern von unten in diese Nut eingreift. Der Greifarm wechselt hierbei vom unteren Trum zum oberen Trum der Gliederkette. Befindet sich der Greifarm im Bereich des oberen Trums, so ist der Behälter bzw. die Palette gefasst und wird vom Greifarm mit einer horizontalen Bewegung mitgenommen. Das Transportorgan wird solange angetrieben, bis der Behälter bzw. die Palette auf dem Fahrzeug ist. Das Fahrzeug wird nun mit dem aufgeladenen Behälter bzw. Palette beispielsweise auf Schienen zum vorgesehenen Ziel verfahren. Auf einem solchen Fahrzeug können mehrere solche Regalbediengeräte angeordnet sein. Für die Erfindung ist zudem wesentlich, dass das erfindungsgemässe Regalbediengerät vergleichsweise schmal gebaut werden kann, sodass das Fahrzeug entsprechend in schmalen Gängen horizontal und/oder vertikal verfahren werden kann. Beim Verfahren des Regalbediengerätes besteht keine Kollisionsgefahr mit den eingelagerten Behältern bzw. Paletten.

Ein wesentlicher Vorteil des erfindungsgemässen Regalbediengerätes wird auch darin gesehen, dass die Bewegung zum Ein- und Auslagern wesentlich gleichförmiger ist als bisher und dass dadurch die Antriebsmittel und auch die Steuerung wesentlich einfacher ausgebildet sein können und auf Grund der einfacheren und kürzeren Bewegung das Ein- und Auslagern schneller als bisher erfolgen kann. Da ruckartige Bewegungen vermieden weren, werden das Transportorgan, die Behälter und auch der Behälterinhalt schonender behandelt.

Zwei Ausführungsbeispiele des erfindungsgemässen Regalbediengerätes werden nachfolgend anhand der Zeichnung näher erläutert. Es zeigen:
- Figur 1: eine räumliche Ansicht eines erfindungsgemässen Regalbediengerät,
- Figur 2: ein Fahrzeug mit vier Regalbediengeräten gemäss der Erfindung,
- Figur 3: schematisch das Auslagern eines Behälters,
- Figuren 4 und 5: schematisch das Greifen eines Behälters,
- Figur 6: schematisch das Einlagern eines Behälters,
- Figur 7: eine räumliche Ansicht eines Greifmittels
- Figur 8: schematisch das Auslagern eines Behälters mit einem Regalbediengerät gemäss einer Variante.

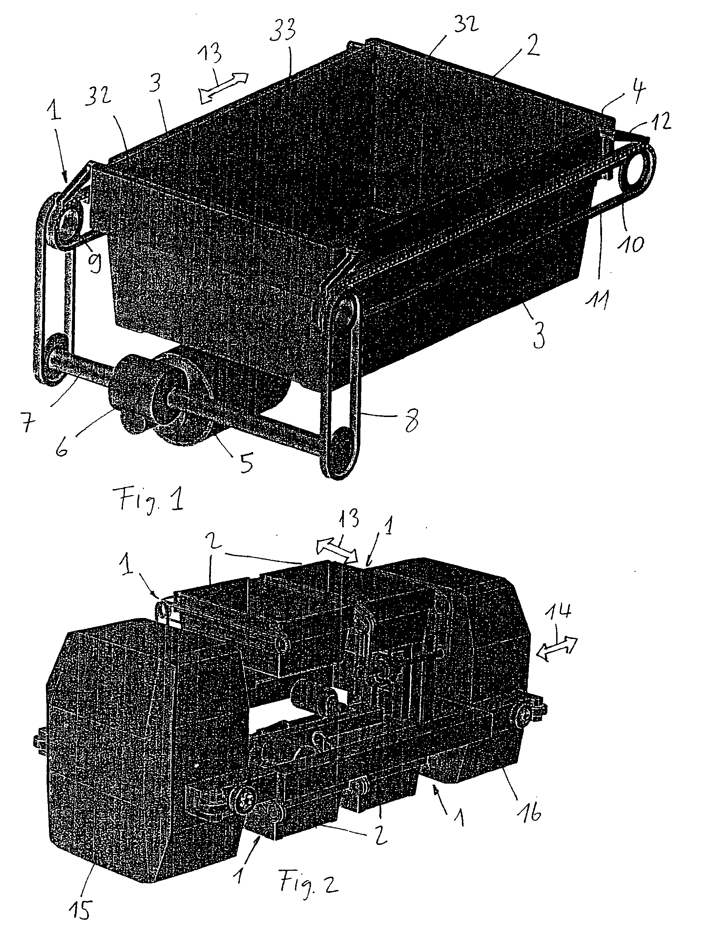

Die Figur 1 zeigt ein erfindungsgemässes Regalbediengerät 1, das mit einem Behälter 2 beladen ist. Auf dem in Figur 2 gezeigten Fahrzeug 15 sind vier solche Regalbediengeräte 1 angeordnet. Solche Fahrzeuge 15 sind bekannt und werden beispielsweise vom Anmelder hergestellt. Das Fahrzeug 15 wird auf hier nicht gezeigten Schienen in den Richtungen des Doppelpfeils 14 verfahren. Die Bewegungen zum Ein- und Auslagern der Behälter 2 erfolgt in den Richtungen des Doppelpfeils 13 und damit quer zu den Richtungen des Doppelpfeils 14. Für die Erfindung ist nun wesentlich, dass das Regalbediengerät 1 zum Ein- und Auslagern und somit in den Richtungen des Doppelpfeils 13 nicht bewegt werden muss.

Der Behälter 2 kann sehr unterschiedlich ausgebildet sein. Er kann auch durch eine Palette oder ein ähnliches Element ersetzt sein. Der hier gezeigte Behälter 2 weist zwei parallel zueinander verlaufende Seitenwände 3 auf, die jeweils im Abstand zueinander zwei seitliche und vertikal verlaufende Nuten 4 besitzen. Diese Nuten 4 befinden sich wie ersichtlich in der Nähe einer der beiden Querwänden 32 sowie im Bereich des oberen Randes 33 des Behälters 2. Die Nuten 4 sind seitlich sowie unten und oben offen und jeweils wie ersichtlich unten und oben etwas konisch erweitert. Der Behälter 2 ist beispielsweise aus Kunststoff oder aus Blech hergestellt. Die Breite der Querwandung 32 beträgt beispielsweise 40 cm, es sind aber auch kleinere oder grössere Abmessungen durchaus möglich.

Das Regalbediengerät 1 ist mit einem Antrieb 5 versehen, der über ein Getriebe 6 eine Welle 7 antreibt, die über zwei Ketten oder Zahnriemen 8 jeweils ein Kettenrad 9 antreibt, um das jeweils ein umlaufendes Transportorgan 11 gelegt ist. Im Abstand zum Kettenrad 9 befindet sich jeweils ein weiteres Kettenrad 10 für die Umlenkung des Transportorgans 11. Die Kettenräder 9 und 10 sind jeweils an einem hier nicht gezeigten Gestell gelagert. Der Antrieb 5 kann ein Elektromotor sein, denkbar ist aber auch eine Ausführung, bei welcher die Welle 7 vom Antrieb des Fahrzeuges 15 mittels Kupplung und Getriebe angetrieben ist.

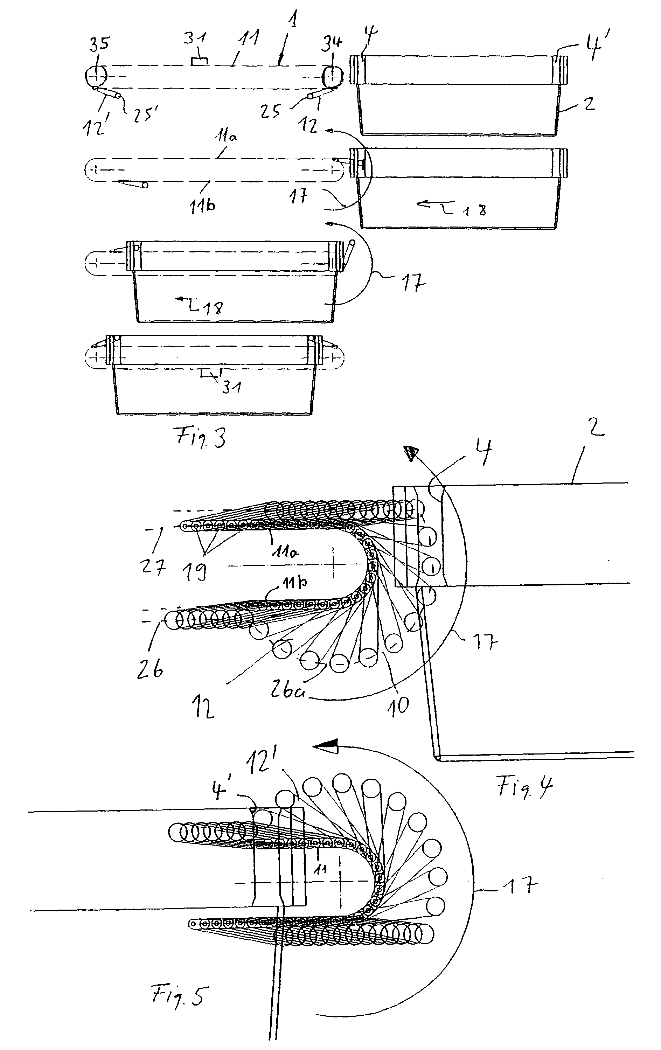

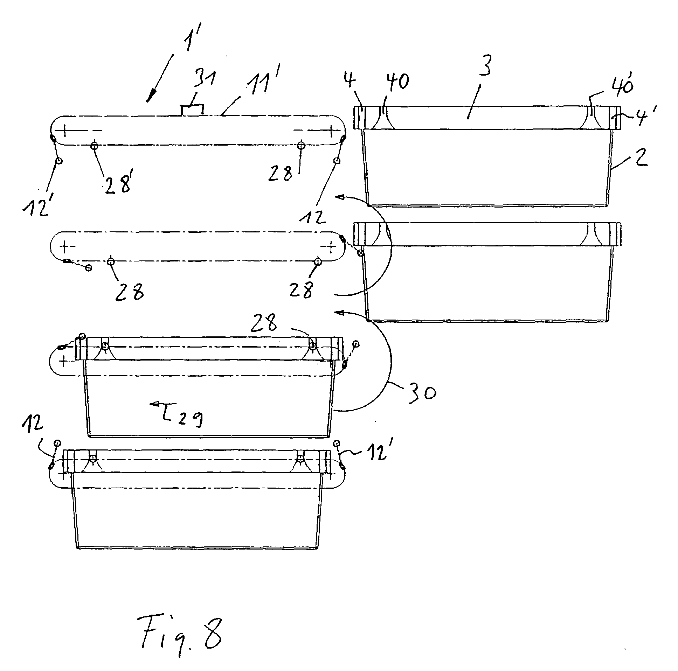

Die beiden umlaufenden Transportorgane 11 sind vorzugsweise Gliederketten mit mehreren Gliedern 19, wie in den Figuren 4 und 5 angedeutet. Zwei dieser Glieder sind besonders gestaltet und als Greifarm 12 ausgebildet. Die Figur 7 zeigt einen solchen Greifarm 12, der zwei Stege 22 sowie einen seitlich von den Stegen 22 vorstehenden Nocken 25 aufweist. Dieser Nocken 25 bildet einen Greifbereich 24. Die beiden Stege 22 weisen jeweils zwei Löcher 23 auf, in welche die Bolzen des Transportorgans 11 eingreifen und damit den Greifarm 12 festhalten. Die Greifarme 12 sind somit ebenfalls Glieder des Transportorgans 11. Der Nocken 25 ist wie ersichtlich im Abstand zu den Löchern 23 und damit am freien Ende des Greifarms 15 angeordnet. Der Greifarm 12 bildet somit einen mechanischen Greifer mit dem Nocken 25 als Mitnehmer. Ist das Transportorgan 11 angetrieben, so wird selbstverständlich der Greifarm 12 mitbewegt. Die Stege 22 sind so angeordnet, dass sie zur Kettenlinie 27 gemäss Figur 4 oder 5 im oberen Trum 11a oder unteren Trum 11b nach aussen geneigt sind. Der Winkel Alpha (Figur 7) zur Kettenlinie ist vorzugsweise kleiner als 20°. Vorzugsweise beträgt der Winkel Alpha etwa 10°. Denkbar ist aber auch eine Ausführung bei welcher dieser Winkel Alpha 0 ist.

Ist das Transportorgan 11 angetrieben, so beschreibt der Nokken 25 die in den Figuren 4 und 5 mit gestrichelter Linie angedeutete Bahn 26. Diese ist wie ersichtlich in einem Bereich 26 A bogenförmig und verläuft ausserhalb der ebenfalls mit einer gestrichelten Linie angedeuteten Bahn 27 des Transportorgans 11. Der Greifarm 12 vergrössert damit in horizontaler Richtung den Wirkbereich des Transportorgans 11.

Das Auslagern eines Behälters 2 wird anhand der Figuren 3 bis 5 nachfolgend erläutert.

In der Figur 3 oben ist der Behälter 2 in einem hier nicht gezeigten Regal gelagert und das Regalbediengerät 1 befindet sich neben diesem Behälter 2 auf dem hier nichtgezeigten Fahrzeug 15. Das Regalbediengerät 1 wurde somit mit dem Fahrzeug 15 zum Behälter 2 verfahren. Das Fahrzeug 5 steht für die nachfolgenden Schritte still. Um den Behälter 2 auszulagern wird das Transportorgan 11 in Richtung des Pfeils 17 angetrieben. Die beiden im Abstand angeordneten Greifarme 12 und 12' werden entsprechend mitbewegt. Der Greifarm 12 fährt nur mit seinem seitlich vorstehenden Nocken 25 von unten in die Nut 4 ein. Dies ist in der Figur 4 anschaulich dargestellt. Das Transportorgan 11 wird nun in gleicher Richtung weiterbewegt und sobald der Greifarm 12 sich im Bereich des oberen Trums 11a befindet, wird der Behälter in Richtung des Pfeils 18 horizontal von rechts nach links bewegt. Befindet sich der Behälter 2 fast vollständig auf dem Regalbediengerät 1, so fährt der Greifarm 12' gemäss Figur 5 von oben in die zweite Nut 4' ein. Es ergibt sich schliesslich die in Figur 3 ganz unten gezeigte symmetrische Anordnung. Diese Anordnung wird mittels einer Schaltfahne 31 und einem hier nicht gezeigten, am Gerät gestellfest angeordneten Sensor festgestellt. Vorzugsweise sind zwei Sensoren angeordnet, mit denen jeweils eine Position des Transportorgans 11 bzw. des Behälters 2 feststellbar ist. Die Schaltfahne 31 ist auf dem Transportorgan 11 angeordnet. Ist die in Figur 3 ganz unten gezeigte Position erreicht, so wird der Antrieb des Transportorgans 11 unterbrochen und der Behälter 2 befindet sich nun auf dem Regalbediengerät 1 wie in Figur 1 gezeigt. Sind mehrere Regalbediengeräte auf den Fahrzeug 15 angeordnet, so kann das Auslagern bei diesen Geräten 1 gleichzeitig oder nacheinander erfolgen. Sind die Regalbediengeräte 1 bzw. das Fahrzeug 15 mit den Behältern 2 beladen, so wird das Fahrzeug 15 ferngesteuert zum vorgesehenen Zielort verfahren und kann dort beispielsweise von Hand oder ebenfalls automatisch entladen werden.

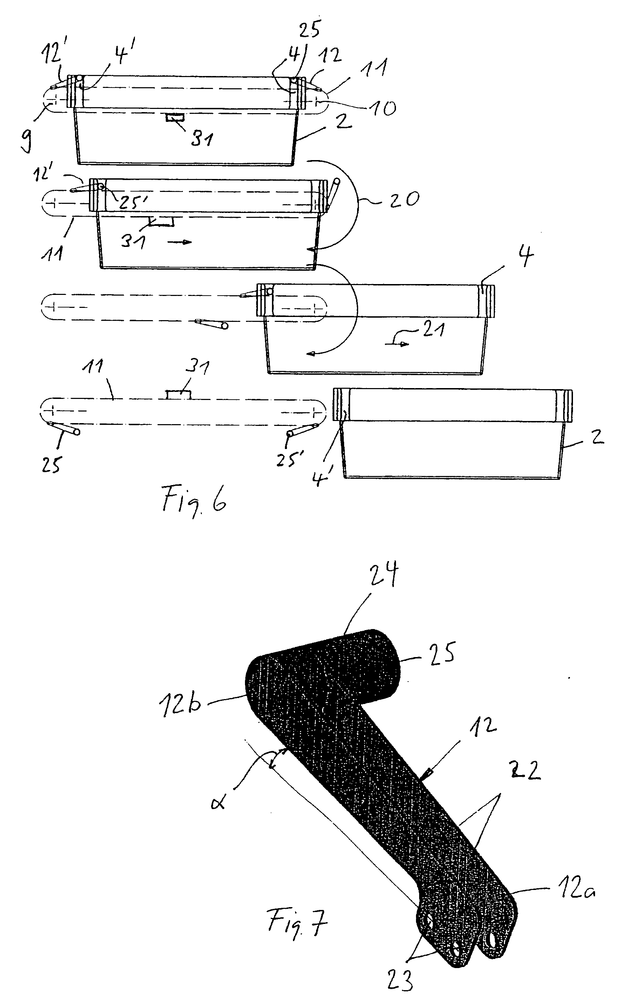

Das Einlagern erfolgt in umgekehrter Richtung und wird nachfolgend anhand der Figur 6 erläutert.

Zum Auslagern wird das Regalbediengerät 1 mit dem Fahrzeug 15 zum Platz des Regals verfahren, bei welchem der Behälter 2 in das Regal eingelagert werden soll. Ist die genannte Stellung erreicht, so wird das Transportorgan 11 in Richtung des Pfeils 20 angetrieben. Der Greifarm 12 beschreibt mit seinem Nocken 25 hierbei einen Bogen und fährt oben aus der Nut 4 heraus. Der andere Greifarm 12' stösst mit seinem Nocken 25' den Behälter 2 in Richtung des Pfeils 21 in Figur 6 von links nach rechts, bis der Behälter 2 eingelagert ist. Am Schluss dieser Bewegung fährt der Nocken 25' unten aus der Nut 4' heraus. Der Behälter 2 befindet sich damit im Abstand zum Transportorgan 11. Die beiden Greifarme 25 und 25' sind wiederum symmetrisch angeordnet und das Regalbediengerät ist nun für das Auslagern eines Behälters bereit. In der Figur 6 wird der Behälter 2 von links nach rechts eingelagert. Mit einer umgekehrten Bewegung des Transportorgans 11 kann in gleicher Weise der Behälter 2 nach links in ein Regal ausgelagert werden.

Das in Figur 8 gezeigte Regalbediengerät 1' ermöglicht eine noch sicherere Führung des Behälters 2 und ist insbesondere für besonders enge Platzverhältnisse vorgesehen. Dieses Regalbediengerät 1' ist im wesentlichen so aufgebaut wie das Regalbediengerät 1, die Transportorgane 11' weisen aber zusätzlich 2 im Abstand zueinander angeordnete Mitnehmer 28 auf. Die Figur 8 zeigt die einzelnen Schritte beim Einlagern eines Behälters 2. Das Transportorgan 11' wird dazu in Richtung des Pfeils 30 angetrieben. Der Greifarm 12 greift von unten in die Nut 4 ein und zieht den Behälter 2 gegen das Transportorgan 11'. Der nachfolgende Mitnehmer 28 wird kurz darauf in eine zweite Nut 40 ein und bei der Weiterbewegung des Transportorgans 11' wird somit der Behälter 2 durch den Greifarm 12 und gleichzeitig durch den Mitnehmer 28 bewegt. Durch diesen doppelten Eingriff ergibt sich eine stabilere und bessere Führung des Behälters 2.

Der Behälter 2 wird nun in Figur 8 von rechts nach links in Richtung des Pfeiles 29 soweit bewegt, bis der Behälter 2 auf dem Regalbediengerät 1' gelagert ist. Kurz vor Ende dieser Bewegung werden die beiden Greifarme 12 und 12' aus den Nuten 4 bzw. 4' nach oben hinausbewegt. Der Behälter 2 ist damit lediglich noch im Eingriff mit den beiden Mitnehmern 28 und 28'. Das Einlagern erfolgt umgekehrt. Die Greifarme 12 und 12' fahren hier aber ebenfalls in die Nuten 4 und 4' ein und führen den Behälter 2 beim Einlagern. Auch bei dieser Ausführung ist ein Positionssensor 31 zur Steuerung des Organs 11' vorgesehen. Ein Positionssensor 31 ist aber nicht zwingend, sondern könnte auch durch andere geeignete Mittel, beispielsweise durch Schalter ersetzt werden. Denkbar ist auch eine Ausführung, bei welcher lediglich ein Mitnehmer 28 oder 28' vorgesehen ist, wobei dieser dann mittig angeordnet ist.

## Patentansprüche

1. Regalbediengerät und Behälter (2) oder Paletten zum Ein- und Auslagern der Behälter (2) oder Paletten aus bzw. in ein Regal mit einem endlosen Transportorgan (11), das um zwei im Abstand zueinander angeordnete Rollen (34, 35) geführt ist und einen oberen Trum (11a) und einen unteren Trum (11b) aufweist und an dem wenigstens ein Greifarm (12) angeordnet ist, der an seinem einen Ende (12a) am Transportorgan (11) befestigt ist und der an seinem freien Ende (12b) einen Nocken (25) aufweist, der eine Bahn (26) beschreibt, die an Umlenkbereichen (10) der genannten Rollen (34, 35) ausserhalb der Bahn (27) des Transportorgans (11) verläuft, wobei der Nocken (25) in einem der Umlenkbereiche (10) zum Aufladen eines Behälters (2) oder einer Palette in eine im wesentlichen vertikal verlaufende Nut (4) des Behälters (2) bzw. der Palette einfährt, **dadurch gekennzeichnet, dass** der Greifarm (12) zur Zugrichtung des endlosen Antriebsorgans (11) geneigt ist, und dass der Nocken (25) beim Ein- und Auslagern an einem Ende in die Nut (4) einfährt und aus dieser an ihrem anderen Ende herausfährt.

2. Gerät nach Anspruch 1, **dadurch gekennzeichnet, dass** zwei Greifarme (12, 12') im Abstand zueinander am Transportorgan (11) befestigt sind und dass die beiden Greifarme (12, 12') zur Zugrichtung geneigt sind.

3. Gerät nach Anspruch 1 oder 2, **dadurch gekennzeichnet, dass** das Transportorgan (11) eine Gliederkette ist und dass der Greifarm (12) ein besonders gestaltetes Glied dieser Gliederkette (11) ist.

4. Gerät nach einem der Ansprüche 1 bis 3, **dadurch gekennzeichnet, dass** in einem Umlenkbereich (10) der Nocken (25) sich von unten nach oben bewegt und unmittelbar nach dem Erreichen der Höhe des oberen Trums (11a) horizontal in der Richtung dieses Trums (11a) bewegt wird.

5. Gerät nach einem der Ansprüche 1 bis 4, **dadurch gekennzeichnet, dass** der Greifarm (12) stabförmig ausgebildet ist und dass im Fall von zwei Greifarmen (12, 12') der Nocken (25) des einen Greifarms (12) nachlaufend und der andere vorlaufend ist.

6. Gerät nach einem der Ansprüche 1 bis 5, **dadurch gekennzeichnet, dass** im Abstand zum Greifarm (12) ein Mitnehmer (28) am Transportorgan (11) befestigt ist und dass beim Auslagern als auch beim Einlagern der Behälter (2) bzw. die Palette durch den Greifarm (12) als auch durch den Mitnehmer (28) geführt ist.

7. Gerät nach Anspruch 6, **dadurch gekennzeichnet, dass** am Transportorgan (11) zwei Greifarme (12, 12') und zwischen diesen zwei Mitnehmer (28, 28') angeordnet sind.

8. Gerät nach einem der Ansprüche 2 bis 7, **dadurch gekennzeichnet, dass** beim Aufladen eines Behälters (2) bzw. einer Palatte ein erster Greifarm (12) mit seinem Nocken (25) von unten in eine erste Nut (4) und der zweite Greifarm (12') mit seinem Nocken (25') von oben in eine zweite Nut (4') einfährt.

9. Gerät nach einem der Ansprüche 2 bis 8, **dadurch gekennzeichnet, dass** beim Abladen eines Behälters ein erster Greifarm (12) mit seinem Nocken (25) oben aus einer ersten Nut (4) ausfährt und der zweite Greifarm (12') den Behälter (2) bzw. die Palette transportiert und bei der Abgabe schliesslich mit seinem Nokken (25') unten aus der Nut (4') herausfährt.

## Claims

1. Storage and retrieval unit and containers (2) or pallets for storing the containers (2) or pallets in a rack, and retrieving them therefrom, having an endless transporting means (11), which is guided around two spaced-apart rollers (34, 35) and has a top strand (11a) and a bottom strand (11b) and on which is arranged at least one gripping arm (12) which, at one end (12a), is fastened on the transporting means (11) and, at its free end (12b), has a protrusion (25) which describes a path (26) which, in deflecting regions (10) of the abovementioned rollers (34, 35), runs outside the path (27) of the transporting means (11), it being the case that, in one of the deflecting regions (10), for the purpose of loading a container (2) or a pallet, the protrusion (25) passes into an essentially vertically running groove (4) of the container (2) or of the pallet, **characterized in that** the gripping arm (12) is inclined in relation to the pulling direction of the endless drive means (11), and **in that** the protrusion (25), during storage and retrieval, passes into the groove (4) at one end and passes out of said groove at its other end.

2. Unit according to Claim 1, **characterized in that** two gripping arms (12, 12') are fastened at a distance apart from one another on the transporting means (11), and **in that** the two gripping arms (12, 12') are inclined in relation to the pulling direction.

3. Unit according to Claim 1 or 2, **characterized in that** the transporting means (11) is a link chain, and **in that** the gripping arm (12) is a specifically configured link of this link chain (11).

4. Unit according to one of Claims 1 to 3, **characterized in that**, in one deflecting region (10), the protrusion (25) moves from bottom to top and, immediately after having reached the level of the top strand (11a), is moved horizontally in the direction of this strand (11a).

5. Unit according to one of Claims 1 to 4, **characterized in that** the gripping arm (12) is of bar-like design, and **in that**, in the case of two gripping arms (12, 12'), the protrusion (25) of one gripping arm (12) trails and the other leads.

6. Unit according to one of Claims 1 to 5, **characterized in that** a driver (28) is fastened on the transporting means (11) at a distance from the gripping arm (12), and **in that**, during retrieval and also during storage, the container (2) or the pallet is guided by the gripping arm (12) and also by the driver (28).

7. Unit according to Claim 6, **characterized in that** two gripping arms (12, 12') and, between these, two drivers (28, 28') are arranged on the transporting means (11).

8. Unit according to one of Claims 2 to 7, **characterized in that**, during loading of a container (2) or of a pallet, a first gripping arm (12) has its protrusion (25) passing into a first groove (4) from beneath and the second gripping arm (12') has its protrusion (25') passing into a second groove (4') from above.

9. Unit according to one of Claims 2 to 8, **characterized in that**, during unloading of the container, a first gripping arm (12) has its protrusion (25) passing out of a first groove (4) at the top and the second gripping arm (12') transports the container (2) or the pallet and, for discharging purposes, finally, has its protrusion (25') passing out of the groove (4') at the bottom.

## Revendications

1. Appareil de commande de rayonnages et récipients (2) ou palettes pour le stockage et l'enlèvement des récipients (2) ou des palettes dans ou hors d'un rayonnage, comprenant un organe de transport sans fin (11) qui est guidé autour de deux rouleaux (34, 35) espacés l'un de l'autre et présente un tronçon supérieur (11a) et un tronçon inférieur (11b) et est disposé sur au moins un bras de saisie (12) qui est fixé à l'une de ses exxtrémités (12a) à l'organe de transport (11) et qui présente à son extrémité libre (12b) une came (25) qui décrit une trajectoire (26) qui s'étend sur des zones de déflexion (10) desdits rouleaux (34, 35) en dehors de la trajectoire (27) de l'organe de transport (11), la came (25) entrant dans l'une des zones de déflexion (10) pour le chargement d'un récipient (2) ou d'une palette dans une rainure (4) du récipient (2) ou de la palette s'étendant essentiellement verticalement, **caractérisé en ce que** le bras de saisie (12) est incliné vers la direction de traction de l'organe d'entraînement sans fin (11), et **en ce que** la came (25) entre, lors du stockage ou de l'enlèvement, au niveau d'une extrémité dans la rainure (4) et ressort de celle-ci à son autre extrémité.

2. Appareil selon la revendication 1, **caractérisé en ce que** deux bras de saisie (12, 12') sont fixés à distance l'un de l'autre sur l'organe de transport (11) et **en ce que** les deux bras de saisie (12, 12') sont inclinés vers la direction de traction.

3. Appareil selon la revendication 1 ou 2, **caractérisé en ce que** l'organe de transport (11) est une chaîne à maillons et **en ce que** le bras de saisie (12) est un maillon de configuration particulière de cette chaîne à maillons (11).

4. Appareil selon l'une quelconque des revendications 1 à 3, **caractérisé en ce que**, dans une région de déflexion (10), la came (25) se déplace de bas en haut et, directement après avoir atteint la hauteur du tronçon supérieur (11a), est déplacée dans la direction de ce tronçon (11a).

5. Appareil selon l'une quelconque des revendications 1 à 4, **caractérisé en ce que** le bras de saisie (12) est réalisé en forme de barre et **en ce que**, dans le cas de deux bras de saisie (12, 12'), la came (25) d'un des bras de saisie (12) est en retard et l'autre est en avance.

6. Appareil selon l'une quelconque des revendications 1 à 5, **caractérisé en ce qu'**à une certaine distance du bras de saisie (12), un entraîneur (28) est fixé sur l'organe de transport (11) et **en ce que** lors de l'enlèvement et aussi du stockage, le récipient (2) ou la palette est guidé par le bras de saisie (12) ainsi que par l'entraîneur (28).

7. Appareil selon la revendication 6, **caractérisé en ce que** deux bras de saisie (12, 12') sont disposés sur l'organe de transport (11) et deux entraîneurs (28, 28') sont disposés entre ceux-ci.

8. Appareil selon l'une quelconque des revendications 2 à 7, **caractérisé en ce que** lors du chargement d'un récipient (2) ou d'une palette, un premier bras de saisie (12) entre par le dessous avec sa came (25) dans une première rainure (4) et le deuxième bras de saisie (12') entre par le dessus avec sa came (25') dans une deuxième rainure (4').

9. Appareil selon l'une quelconque des revendications 2 à 8, **caractérisé en ce que** lors du déchargement d'un récipient, un premier bras de saisie (12) sort avec sa came (25) par le haut hors d'une première rainure (4) et le deuxième bras de saisie (12') transporte le récipient (2) ou la palette et lors du déchargement ressort finalement avec sa came (25') hors de la rainure (4').
